# DEMANDE DE BREVET EUROPEEN

(11) **EP 1 134 445 A1**
(43) Date de publication de la demande: **19.09.2001**
(21) Numéro de dépôt: 00200979.3
(22) Date de dépôt: 17.03.2000
(51) Int. Cl.: F16D 1/12

(54) **Rondelle cadran pour réglage angulaire de précision**

(71) Demandeur: Techspace Aero, 4041 Milmort Herstal (BE)
(72) Inventeur: Lassarrade, Pierre Albert Jean Marcel, 4000 Liège (BE); Leclercq, Stéphane Maurice Edgard, 4671 Housse (BE)
(74) Mandataire: Berrou, Paul

(57) **Abrégé**

Cette rondelle cadran (8) réversible comporte plusieurs encoches (7) susceptibles de coopérer avec un ergot (6) d'une pièce à immobiliser sur un corps (2) et peut être fixée sur le corps dans une position choisie parmi quatre positions décalées de 90°. Avec N2 encoches (7) judicieusement disposées, on peut immobiliser la pièce dans une position angulaire choisie parmi N positions régulièrement réparties autour de l'axe, N2 étant inférieur à N.

## Description

L'invention concerne un dispositif pour permettre le montage d'un mécanisme sur un corps dans une position angulaire donnée choisie parmi N positions régulièrement réparties autour d'un axe, ledit dispositif comportant une pièce fixée sur le corps et qui présente une pluralité d'encoches susceptibles de coopérer avec un ergot solidaire du mécanisme pour immobiliser ce dernier en rotation.

Dans de nombreux systèmes, il est nécessaire de caler angulairement et avec précision un mécanisme, par exemple l'arbre d'une vanne, sur un corps. Lorsque le calage angulaire est le même pour tous les systèmes issus d'une chaîne de fabrication, il suffit de prévoir un ergot sur le dispositif et de loger cet ergot dans une rainure prévue à cet effet dans le corps.

Lorsque le calage angulaire est différent pour plusieurs systèmes issus d'une même chaîne de fabrication, on peut prévoir plusieurs rainures sur le corps, et choisir la rainure appropriée pour loger l'ergot du mécanisme, en fonction du calage angulaire souhaité afin de satisfaire les besoins avec un nombre moindre de références différentes.

Les rainures peuvent être remplacées par des encoches ménagées dans des pièces d'immobilisation du mécanisme fixées sur le corps. Mais le nombre encoches susceptibles d'être réalisées sur la pièce d'immobilisation est techniquement limité, car les parois qui séparent deux encoches successives doivent avoir une dimension suffisante pour supporter les couples exercés par le mécanisme.

Si l'on veut réaliser des systèmes dans lesquels les positions angulaires sont des multiples de 5°, il faudrait réaliser 72 (360/5) encoches dans la pièce d'immobilisation, ce qui est excessif.

Le but de l'invention est de proposer un dispositif de montage tel que mentionné en introduction dans lequel le nombre d'encoches est nettement inférieur au nombre de positions susceptibles d'être atteintes.

L'invention atteint son but par le fait que ladite pièce est constituée par une rondelle réversible susceptible d'être fixée sur le corps dans N1 positions de fixation régulièrement espacées autour de l'axe, ladite rondelle comportant N2 encoches disposées de telle manière que l'une quelconque des positions angulaires est définie par un sens de montage de la rondelle, une position de fixation et l'une desdites encoches.

Avantageusement, la rondelle comporte quatre positions de fixation décalées angulairement l'une par rapport à l'autre de 90°.

Lorsqu'on connaît l'encoche, la position de fixation et la face qui définissent un angle de calage compris entre 0 et 90°, il suffit de tourner la pièce d'un quart de tour pour obtenir un angle de calage supérieur de 90°.

Selon une utilisation particulière, les N positions angulaires sont décalées l'une par rapport à l'autre de 5°.

Selon un premier mode de réalisation, la rondelle comporte onze encoches positionnées angulairement autour de l'axe par rapport à la première position de fixation respectivement à 0°, 30°, 60°, 95°, 125°, 155°, 190°, 220°, 250°, 285° et 315°. La rondelle comporte sur ses deux faces, en regard de chaque encoche, l'indication de la valeur de l'angle compris entre cette encoche et la position de fixation la plus proche dans un sens donné.

Selon un deuxième mode de réalisation, la rondelle comporte 9 encoches régulièrement espacées de 40° l'une par rapport à l'autre, et la première position de fixation est décalée de 2°5 par rapport à l'une de ces encoches. La rondelle comporte sur ses deux faces en regard de chaque encoche, l'indication de la mesure de l'angle compris entre cette encoche et la position de fixation la plus proche dans un sens donné, la valeur de 2°5 étant soustraite à cette mesure sur l'une des faces de la rondelle et ajoutée à cette mesure sur l'autre face. Dans ce cas, les angles multiples de 10° sont indiqués sur une face et les angles se terminant par le chiffre 5 sont indiqués sur l'autre face.

D'autres caractéristiques et avantages de l'invention ressortiront à la lecture de la description suivante faite à titre d'exemple et en référence aux dessins annexés dans lesquels :
- la figure 1 est une coupe radiale, selon la ligne I-I de la figure 2, d'un dispositif de fixation angulaire d'un mécanisme sur un corps selon la présente invention selon un premier mode de réalisation ;
- la figure 2 est une vue de dessus de la rondelle d'immobilisation du mécanisme sur le corps ;
- la figure 3 est une vue d'une face de la rondelle de la figure 2 ;
- la figure 4 est une vue de l'autre face de la rondelle de la figure 2;
- la figure 5 est une vue d'une face d'une rondelle d'immobilisation selon un deuxième mode de réalisation de l'invention ; et
- la figure 6 est une vue de l'autre face de la rondelle d'immobilisation de la figure 5.

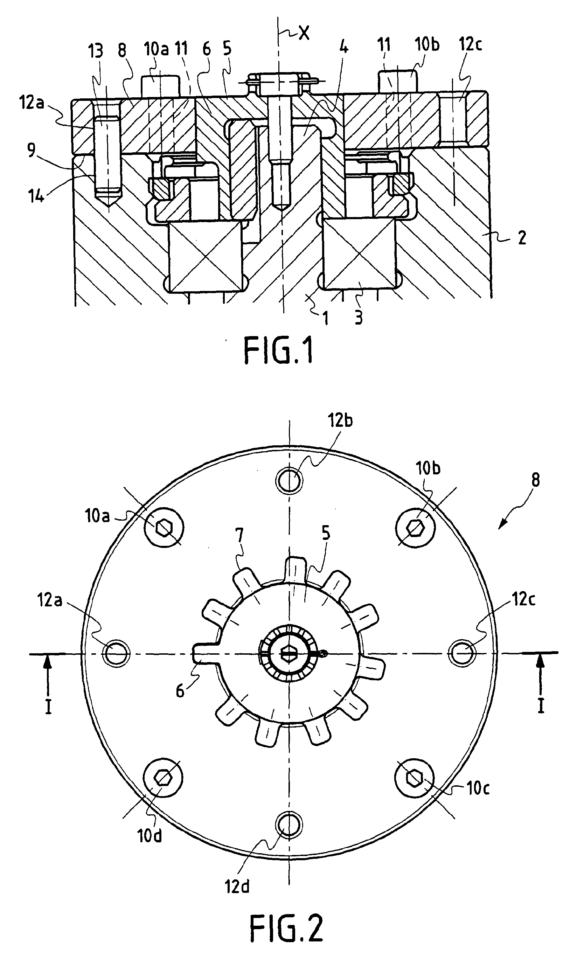

La figure 1 montre un arbre 1 monté rotatif autour d'un axe X sur un corps 2 avec interposition d'un palier 3. L'extrémité 4 de l'arbre 1 est disposée dans une pièce intermédiaire 5 qui comporte un ergot 6 disposé dans une encoche 7 ménagée dans une rondelle 8 fixée sur la face d'extrémité 9 du corps 2 au moyen de quatre vis 10a, 10b, 10c, 10d traversant des alésages 11 équidistants de l'axe X et espacés de 90°.

La rondelle 8 comporte en outre quatre alésages supplémentaires 12a, 12b, 12c, 12d équidistants de l'axe X et espacés de 90°. Les alésages 12a, 12b, 12c, 12d sont respectivement situés sur les bissectrices des angles formés par les diamètres reliant les alésages 11 des vis 10a, 10c ; 10b, 10d diamétralement opposés. L'un des quatre alésages 12a à 12d peut loger une goupille 13 qui coopère avec un trou 14 ménagé en correspondance dans le corps 2. Ainsi, la rondelle 8 peut occuper une position déterminée choisie parmi 4 positions régulièrement réparties autour de l'axe selon l'alésage 12a à 12d qui reçoit la goupille 13.

Ainsi que cela est montré sur la figure 2, la rondelle 8 comporte sur le pourtour de la pièce intermédiaire 5 une pluralité d'encoches 7, et l'ergot 6 peut loger dans l'une quelconque de ces encoches, ce qui permet de modifier la position angulaire de l'ergot 6 par rapport à la goupille 13.

D'autre part, la rondelle 8 est réversible.

Autrement dit, l'une quelconque des faces de la rondelle 8 peut être en appui contre la face d'extrémité 9 du corps 2.

En combinant le sens du montage de la rondelle 8 sur le corps 2 et le choix de l'alésage 12a à 12d qui reçoit la goupille 13, on constate qu'une encoche 7 donnée peut prendre au maximum huit positions angulaires différentes autour de l'axe X.

Avec un nombre limité d'encoches 7 judicieusement disposées, on peut donc obtenir facilement un très grand nombre de positions angulaires possibles pour l'ergot 6.

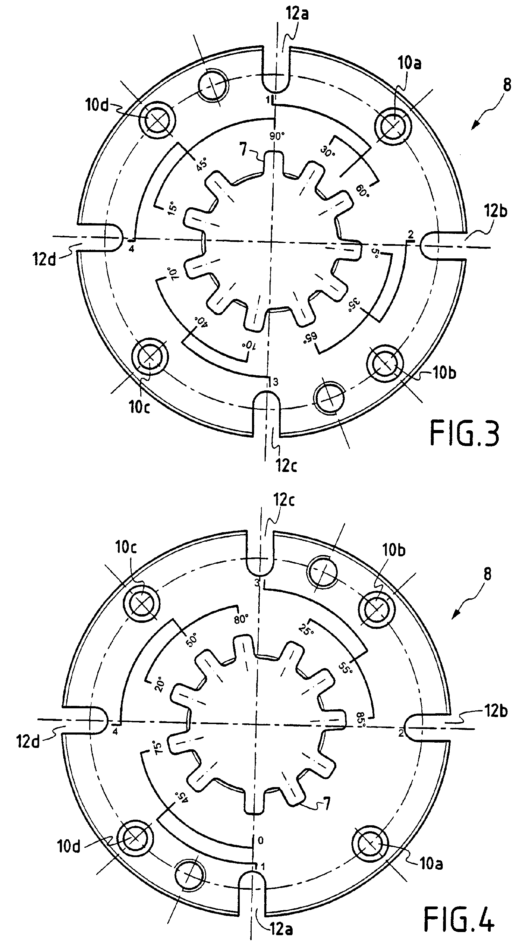

Les alésages 12a à 12d peuvent être remplacés par des encoches ménagées à la périphérie de la rondelle 8 ainsi que cela est montré sur les figures 3 et 4.

La figure 3 montre une disposition angulaire des encoches 7 autour de l'axe X par rapport à un alésage 12a de référence qui permet d'obtenir n'importe quelle position angulaire multiple de 5°. Dans cette disposition, les encoches 7 sont au nombre de 11 et sont positionnées angulairement par rapport à l'alésage 12a, dans le sens des aiguilles d'une montre, respectivement à 0°, 30°, 60°, 95°, 125°, 155°, 190°, 220°, 250°, 285° et 315°. Les mesures des angles qui séparent chaque alésage 12a à 12d dans le sens des aiguilles d'une montre, des encoches 7 situées dans le quadrant adjacent sont inscrites par gravage devant chaque encoche 7.

Sur l'autre face de la rondelle 6, montrée sur la figure 4, on indique de la même manière les mesures des angles de chaque encoche 7 par rapport à un alésage 12a à 12d.

Avec les dispositions angulaires des encoches 7, telles que mentionnées ci-dessus, on constate qu'avec 11 encoches, on peut atteindre toute les positions angulaires multiples de 5 et comprises entre 0 et 90°. Pour obtenir les positions angulaires comprises entre 90 et 180°, il suffit de tourner la rondelle 8 dans le sens des aiguilles d'une montre d'un quart de tour, et ainsi de suite jusqu'à 360°.

Pour positionner la pièce 5 dans la position angulaire voulue multiple de 5, on repère l'encoche 7 de la rondelle 8 qui correspond à la position angulaire désirée. Cette recherche s'effectue sur les deux faces de la rondelle 8. On repère ensuite sur la même face le trou de goupille qui correspond à l'encoche repéré en suivant le trait de gravage qui relie l'encoche 7 à l'alésage 12a-12d. On place ensuite la rondelle 8 sur la pièce intermédiaire 5, de sorte que l'ergot 6 rentre dans l'encoche identifiée. Ensuite, on fait tourner la pièce intermédiaire 5 de telle sorte que l'alésage 12a-12d identifié se positionne devant le trou 14 et on place la goupille 13. Puis on serre les quatre vis 10a à 10d. Au cours de la manipulation précédente, les gravages utilisés sont disposés sur la face de rondelle orientée vers l'opérateur.

Dans l'exemple montré ci-dessus, une encoche est positionnée à 0° par rapport à l'alésage 12a, ce qui permet d'obtenir n'importe quel angle de calage multiple de 5°.

Il est possible, avec une même rondelle 8, d'atteindre un plus grand nombre de positions. Pour cela, il suffit de rajouter sur la rondelle 8 un ou plusieurs référentiels, chaque référentiel étant composé de quatre trous de goupille 12a à 12d et de quatre alésages 11 équidistants, décalés angulairement par rapport au premier référentiel. La valeur angulaire affectée à chaque encoche dépend alors du référentiel choisi.

Il est également possible d'utiliser cinq rondelles 8 comportant 11 encoches et 4 trous de goupille, dont les référentiels seraient déplacés angulairement l'un par rapport à l'autre. Ainsi, la première rondelle 8 localiserait toutes les positions multiples de 5° en partant de 0°, la deuxième en partant de 1°, et ainsi de suite. On pourrait ainsi atteindre toutes les positions angulaires incrémentées de 1° avec cinq rondelles 8.

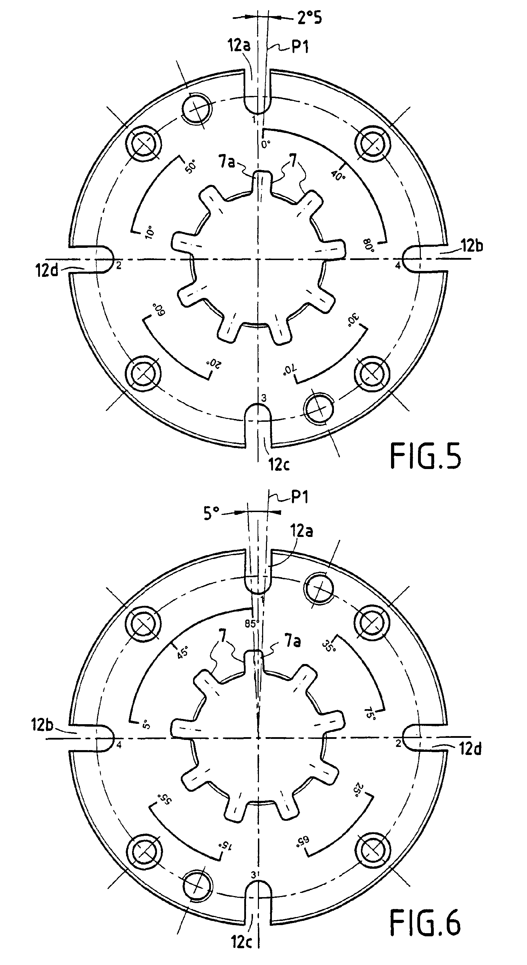

Les figures 5 et 6 montrent un deuxième mode de réalisation de la rondelle 8 qui permet de positionner la pièce intermédiaire 5 dans une position angulaire précise choisie parmi 72 positions angulaires espacées l'une de l'autre de 5°.

La rondelle 8 comporte neuf encoches 7 espacées de 40°. Le plan angulaire P1 de référence des angles de calage passe par l'encoche 7a. Elle comporte également sur son pourtour quatre encoches périphériques ou alésages référencés 12a à 12d espacés de 90°. L'encoche 12a est écartée du plan P1 de 2°5.

Comme pour le premier mode de réalisation, des gravages, indiquant les angles mesurés entre le plan P1 ou une perpendiculaire à ce plan P1 passant par l'axe X et la position de chaque encoche 7, sont réalisés sur chaque face de la rondelle 8. Les angles notés sur la face montrée sur la figure 5 sont ainsi des multiples de 10. Lorsqu'on retourne la rondelle 8, l'encoche 7a se positionne à 5° du plan P1. Sur cette deuxième face, les angles ont des valeurs qui se terminent par le chiffre 5, et tous les angles dont les valeurs se terminent par 5 et sont comprises entre 0 et 90° sont identifiés sur cette deuxième face par rapport à l'encoche périphérique correspondante 12a à 12d.

La rondelle 8 décrite ci-dessus, selon le premier mode de réalisation montré sur les figures 3 ou 4, ou selon le deuxième mode de réalisation montré sur les figures 5 et 6, permet de positionner avec précision la pièce intermédiaire 5 par rapport au corps 2. L'arbre 1 peut être par exemple l'arbre d'une vanne dont l'angle d'ouverture est mesuré par rapport à la position de l'ergot 6.

## Revendications

1. Dispositif pour permettre le montage d'un mécanisme (5) sur un corps (2) dans une position angulaire donnée choisie parmi N positions régulièrement réparties autour d'un axe X, ledit dispositif comportant une pièce fixée sur le corps (2) et qui présente une pluralité d'encoches (7) susceptibles de coopérer avec un ergot (6) solidaire du mécanisme (5) pour immobiliser ce dernier en rotation,
**caractérisé par** le fait que ladite pièce est constituée par une rondelle (8) réversible susceptible d'être fixée sur le corps dans N1 positions de fixation régulièrement espacées autour de l'axe X, ladite rondelle (8) comportant un nombre N2 d'encoches (7), N2 étant inférieur à N et ces encoches (7) étant disposées de telle manière que l'une quelconque des N positions angulaires est définie par un sens de montage de la rondelle (8), une position de fixation et l'une de ces encoches.

2. Dispositif selon la revendication 1, **caractérisé par** le fait que la rondelle (8) comporte quatre positions de fixation décalées l'une par rapport à l'autre de 90°.

3. Dispositif selon la revendication 2, **caractérisé par** le fait que les N positions angulaires sont décalées l'une par rapport l'autre de 5°.

4. Dispositif selon la revendication 3, **caractérisé par** le fait que la rondelle (8) comporte onze encoches (7) positionnées angulairement autour de l'axe X par rapport à la première position de fixation respectivement à 0°, 30°, 60°, 95°, 125°, 155°, 190°, 220°, 250°, 285° et 315°.

5. Dispositif selon la revendication 4, **caractérisé par** le fait que la rondelle (8) comporte sur ses deux faces, en regard de chaque encoche l'indication de la valeur de l'angle compris entre cette encoche et la position de fixation la plus proche dans un sens donné.

6. Dispositif selon la revendication 3, **caractérisé par** le fait que la rondelle (8) comporte neuf encoches régulièrement espacées de 40° l'une par rapport à l'autre, et par le fait que la première position de fixation est décalée angulairement de 2°5 par rapport à l'une de ces encoches.

7. Dispositif selon la revendication 6, **caractérisé par** le fait que la rondelle (8) comporte sur ses deux faces en regard de chaque encoche (7), l'indication de la mesure de l'angle compris entre cette encoche (7) et la position de fixation la plus proche dans un sens donné, la valeur de 2°5 étant soustraite à cette mesure sur l'une des faces de la rondelle (8) et ajoutée à cette mesure sur l'autre face.

8. Dispositif selon l'une quelconque des revendications 2 à 7, **caractérisé par** le fait que les positions de fixation sont définies par quatre encoches (12a, 12b, 12c, 12d) ménagées à la périphérie de la rondelle (8) et susceptibles de coopérer avec une goupille (13) solidaire du corps (2).

9. Dispositif selon la revendication 8, **caractérisé par** le fait que la rondelle (8) comporte en outre quatre alésages (11) équidistants de l'axe X destinés à coopérer avec des vis de fixation (10a, 10b, 10c, 10d).

10. Dispositif selon l'une quelconque des revendications 1 à 9, **caractérisé par** le fait que la rondelle (8) comporte plusieurs ensembles de N1 positions de fixation, les N1 positions d'un ensemble étant décalées angulairement par rapport aux N1 positions d'un autre ensemble.

11. Dispositif selon l'une quelconque des revendications 1 à 9, **caractérisé par** le fait que la rondelle (8) est choisie dans un jeu de rondelles dont les N1 positions de fixation sont décalées angulairement d'une rondelle à l'autre.
